# EUROPÄISCHE PATENTANMELDUNG

(11) **EP 4 466 999 A1**
(43) Veröffentlichungstag der Anmeldung: **27.11.2024**
(21) Anmeldenummer: 24177222.7
(22) Anmeldetag: 22.05.2024
(51) Int. Cl.: A21C 3/02

(54) **TEIGVERARBEITUNGSVORRICHTUNG UND VERFAHREN**

(30) Priorität: 26.05.2023 DE 102023113958
(71) Anmelder: Fritsch Bakery Technologies GmbH & Co. KG, 97348 Markt Einersheim (DE)
(72) Erfinder: Fackelmann, Markus, 97334 Sommerach (DE)
(74) Vertreter: Grünecker Patent- und Rechtsanwälte PartG mbB

(57) **Zusammenfassung**

Eine Teigverarbeitungsvorrichtung (1) mit einer Fördervorrichtung (3), die dazu konfiguriert ist, ein Teigband (2) zu fördern, und mit einer Verbreiterungsvorrichtung (4), die dazu konfiguriert ist, das durch die Fördervorrichtung (3) geförderte Teigband (2) zu verbreitern, wobei ein Ausmaß der durch die Verbreiterungsvorrichtung (4) erzeugten Verbreiterung des Teigbands (2) durch Einstellen eines oder mehrerer Parameter veränderbar ist. Die Teigverarbeitungsvorrichtung (1) zeichnet sich aus durch eine Erfassungseinheit (12), die dazu konfiguriert ist, eine Position einer Seitenkante (13) des Teigbands (2) vor und/oder nach dem Durchlaufen der Verbreiterungsvorrichtung (4) zu erfassen, und durch eine Verarbeitungseinheit (18), die dazu konfiguriert ist, den Parameter oder einen der Parameter basierend auf einem Signal von der Erfassungseinheit (12) einzustellen.

## Beschreibung

Die Erfindung bezieht sich auf Teigverarbeitungsvorrichtungen und Verfahren zum Verbreitern von Teigbändern.

Viele Verfahren zur Herstellung von Backwaren umfassen das kontinuierliche Verarbeiten von Teigbändern. Dabei werden die Teigbänder unter anderem auf eine gewünschte Dicke und/oder Breite gebracht. Häufig werden die Teigbänder auf Förderbändern transportiert. Ist eine Reduzierung der Dicke erforderlich, kann eine Walze auf das Teigband einwirken, deren Rotationsachse senkrecht zu der Förderrichtung des Förderbandes orientiert ist. Als schonendere Alternative zu einzelnen Walzen sind Walzengruppen, sogenannte Satellitenwalzen, bekannt, beispielsweise aus der DE 102 42 576 A1. Die Reduzierung der Dicke geht bei diesen Vorrichtungen vorwiegend mit einer Längung des Teigbands in Förderrichtung einher, sodass ein stromabwärts der Walze angeordnetes Förderband schneller laufen muss als ein stromaufwärts angeordnetes Förderband.

Vorrichtungen zum Verbreitern von Teigbändern sind z. B. aus der EP 0 920 255 A1 und der DE 32 38 388 A1 bekannt. Erstere offenbart eine Vorrichtung, in der eine Walze eingesetzt wird, deren Rotationsachse parallel zu der Förderrichtung des Teigbands verläuft. Diese Walze wird senkrecht zu der Förderrichtung hin und her bewegt, um so das Teigband senkrecht zur Förderrichtung auszuwalzen. Aus der DE 32 38 388 A1 ist eine Vorrichtung bekannt, die mit Hilfe einer unterhalb des Förderbandes liegenden Schneckenwelle und einer obenliegenden Druckwalze eine sogenannte Querauswelleinheit bildet.

Die DE 10 2008 000 763 A1 offenbart eine Vorrichtung, die sowohl zum Verbreitern als auch zum Verlängern bzw. zur Reduzierung der Dicke des Teigbands vorgesehen ist. Dort wird eine Schneckenwelle zum Verbreitern mit einer Satellitenwalze zum Verlängern kombiniert. Aus der AT 502 608 A1 und der DE 10 2020 202 215 A1 sind Vorrichtungen bekannt, die eine Satellitenwalzen umfassen, die in einem Winkel zu einer Förderrichtung des Teigbands angeordnet sind, um das Teigband zu verbreitern.

Die bekannten Vorrichtungen können nicht genau auf eine gewünschte Bandbreite eingestellt werden. Das liegt unter anderem daran, dass das ankommende Teigband keine konstante Breite aufweist und die bekannten Verbreiterungsvorrichtungen nicht während des Betriebs an die schwankende Breite angepasst werden können. Daher wird die Vorrichtung beim Aufbau oder beim Umrüsten auf verschiedene Produkte meist so eingestellt, dass das Teigband über die gewünschte Breite hinaus verbreitert wird. Anschließend sind dann Beschneidungsvorrichtungen vorgesehen, die das Teigband durch Abschneiden von überschüssigem Teig auf die gewünschte Breite beschneiden. Diese Vorgehensweise verursacht entweder große Mengen an ungenutztem Teigabfall oder einen hohen Aufwand für die Rückführung der Teigreste, bspw. zu einem Banderzeuger.

Es ist eine Aufgabe der Erfindung, eine Teigverarbeitungsvorrichtung und ein Verfahren anzugeben, das Teigabfall und/oder den Rückführungsaufwand reduziert. Diese Aufgabe wird gelöst durch eine Teigverarbeitungsvorrichtung mit den Merkmalen des Anspruchs 1 sowie durch ein Verfahren mit den Merkmalen des Anspruchs 9.

Es wird eine Teigverarbeitungsvorrichtung mit einer Fördervorrichtung, die dazu konfiguriert ist, ein Teigband zu fördern, und einer Verbreiterungsvorrichtung, die dazu konfiguriert ist, ein durch die Fördervorrichtung gefördertes Teigband zu verbreitern, offenbart. Ein Ausmaß der durch die Verbreiterungsvorrichtung erzeugten Verbreiterung des Teigbands ist durch Einstellen eines oder mehrerer Parameter veränderbar. Die Teigverarbeitungsvorrichtung zeichnet aus sich durch eine Erfassungseinheit, die dazu konfiguriert ist, eine Position einer Seitenkante des Teigbands vor und/oder nach dem Durchlaufen der Verbreiterungsvorrichtung zu erfassen, und durch eine Verarbeitungseinheit, die dazu konfiguriert ist, den Parameter oder einen der Parameter basierend auf einem Signal von der Erfassungseinheit einzustellen. Vorzugsweise kann die Erfassungseinheit dazu konfiguriert sein, die Position der Seitenkante des Teigbands vor und/oder nach dem Durchlaufen der Verbreiterungsvorrichtung wiederholt oder kontinuierlich zu erfassen. Alternativ oder zusätzlich kann die Verarbeitungseinheit dazu konfiguriert sein, den Parameter oder einen der Parameter basierend auf einem Signal von der Erfassungseinheit wiederholt oder kontinuierlich einzustellen.

Durch die Erfassung der Breite und/oder der Position einer Seitenkante des Teigbands und Einstellung des Parameters kann die Teigverarbeitungsvorrichtung dazu konfiguriert sein, eine Schwankung der Teigbandbreite stromabwärts der Verbreiterungsvorrichtung zu reduzieren. Besonders günstig kann es sein, wenn die Teigverarbeitungsvorrichtung dazu konfiguriert ist, die Teigbandbreite stromabwärts der Verbreiterungsvorrichtung im Wesentlichen konstant zu halten. So können durch Beschneidung anfallende Teigreste reduziert oder gänzlich vermieden werden.

Als Verbreiterungsvorrichtung können z. B. bekannte Teigbandverbreiterungsvorrichtungen, wie z. B. die in den weiter oben erläuterten Fundstellen offenbarten, angesehen werden, bei denen ein Ausmaß der erzeugten Verbreiterung des Teigbands durch Einstellen eines oder mehrerer Parameter veränderbar ist, vorzugsweise während des Betriebs veränderbar ist. Als Erfassungseinheit können Systeme angesehen werden, welche dazu konfiguriert sind das Teigband, insbesondere dessen Breite und/oder eine Position von dessen Seitenkante, zu vermessen, Insbesondere ist es denkbar, dass die Erfassungseinheit eine optische Messvorrichtung, wie z. B. eine Kamera, vorzugsweise mit einem Bildverarbeitungssystem, oder ein Lasermesssystem umfasst. Die Verarbeitungseinheit kann bspw. einen oder mehrere Aktoren oder Leistungsschaltkreise umfassen, die z. B. dazu konfiguriert sein können, die Positionierung verschiedener Komponenten der Verbreiterungsvorrichtung und/oder eine oder mehrere Spannungen und/oder Stromstärken, mit denen verschiedene Komponenten, bspw. Motoren und andere Aktoren, der Verbreiterungsvorrichtung versorgt werden, einzustellen.

Die Verbreiterungsvorrichtung kann eine Satellitenwalze umfassen. Dadurch kann die Teigverarbeitungsvorrichtung, insbesondere die Verbreiterungsvorrichtung, dazu konfiguriert sein, das Teigband auf besonders schonende Art zu verbreitern und/oder das Risiko, dass Risse in dem Teigband entstehen, zu reduzieren. Die Satellitenwalze kann mindestens zwei Walzen umfassen, die jeweils zum Eingreifen mit dem Teigband konfiguriert sein können. Die Satellitenwalze kann des Weiteren eine Trommel umfassen. Die Trommel kann dazu konfiguriert sein, die Walzen um eine Walzenachse drehbar zu lagern. Die Trommel selbst kann um eine Rotationsachse rotierbar sein. Durch eine Rotation der Trommel können die Walzen um die Rotationsachse drehbar sein. Die Rotationsachse, um die die Trommel rotierbar ist, kann identisch mit einer Rotationsachse der Satellitenwalze sein. Als Trommel können z. B. zwei Platten angesehen werden, zwischen denen die Walzen montiert sind. Die Platten können als Trommelböden fungieren, an denen bspw. Lagervorrichtungen vorgesehen sind, die zum rotierbaren Lagern der zwei Platten und dadurch der Trommel konfiguriert sein können. Bezüglich Teigverarbeitungsvorrichtungen, insbesondere Verbreiterungsvorrichtungen wird hiermit der Inhalt der DE 10 2020 202 215 A1 in diese Anmeldung aufgenommen.

Eine Rotationsachse der Satellitenwalze und/oder der Trommel kann in einem Winkel zu einer Förderrichtung der Fördervorrichtung orientiert sein. Der Winkel kann einstellbar sein. Durch Einstellen des Winkels kann die Teigverarbeitungsvorrichtung, insbesondere die Verbreiterungsvorrichtung dazu konfiguriert sein, das Ausmaß der durch die Verbreiterungsvorrichtung erzeugten Verbreiterung des Teigbands einzustellen. Besonders günstig kann es sein, wenn die Verarbeitungseinheit dazu konfiguriert ist, den Winkel als den Parameter oder einen der Parameter einzustellen.

Ein Fachmann erkennt, dass zwischen der Trommelachse und der Produktionsrichtung immer vier Winkel eingeschlossen werden, die zusammen 360° ergeben und von denen jeweils zwei sogenannte Scheitelwinkel und folglich gleichgroß sind. Es kann zum Verständnis beitragen, die Lage des Winkels, in dem die Rotationsachse zu der Förderrichtung orientiert ist, zu konkretisieren. Die Rotationsachse wird durch die Förderrichtung in zwei Schenkel geteilt, die sich jeweils von dem Schnittpunkt der Förderrichtung und der Rotationsachse in entgegengesetzte Richtungen erstrecken. Als Winkel, in dem die Rotationsachse zu der Förderrichtung orientiert ist, kann im Folgenden ein Winkel angesehen werden, der zwischen der Förderrichtung und demjenigen Schenkel der Rotationsachse eingeschlossen wird, der sich auf derjenigen Seite der Förderrichtung erstreckt, die in dieselbe Richtung weist, in der die Teigverbreiterung erfolgt. Der Winkel kann bezüglich der Förderrichtung stromaufwärts oder stromabwärts der Satellitenwalze eingeschlossen sein.

Alternativ oder zusätzlich kann die Verarbeitungseinheit dazu konfiguriert sein, einen Abstand zwischen der Fördervorrichtung und einer Rotationsachse der Satellitenwalze als den Parameter oder einen der Parameter einzustellen.

Weiterhin alternativ oder zusätzlich kann die Verarbeitungseinheit dazu konfiguriert sein, eine Rotationsgeschwindigkeit der Satellitenwalze als den Parameter oder einen der Parameter einzustellen.

Die Erfindung bezieht sich auch auf ein Verfahren zum Verarbeiten von Teig, insbesondere eines Teigbands, durch eine Teigverarbeitungsvorrichtung. Das Verfahren umfasst Fördern des Teigbands durch eine Fördervorrichtung und Verbreitern des Teigbands durch eine Verbreiterungsvorrichtung, wobei ein Ausmaß der durch die Verbreiterungsvorrichtung erzeugten Verbreiterung des Teigbands durch Einstellen eines oder mehrerer Parameter veränderbar ist. Das Verfahren umfasst des Weiteren Erfassen einer Breite des Teigbands vor und/oder nach dem Durchlaufen der Verbreiterungsvorrichtung und Einstellen des oder eines der Parameter basierend auf der erfassten Breite des Teigbands.

Durch die Erfassung der Breite und/oder der Position einer Seitenkante des Teigbands und Einstellung des Parameters kann durch das Verfahren eine Schwankung der Teigbandbreite stromabwärts der Verbreiterungsvorrichtung reduzierbar sein. Besonders günstig kann es sein, wenn das Verfahren die Teigbandbreite stromabwärts der Verbreiterungsvorrichtung im Wesentlichen konstant halten kann. So können durch Beschneidung anfallende Teigreste reduziert oder gänzlich vermieden werden. Die weiter oben mit Bezug auf die Teigverarbeitungsvorrichtung und ihre Komponenten erläuterten Definitionen und beispielhaften Konkretisierungen können auch auf das Verfahren anwendbar sein.

Das Einstellen eines oder mehrerer Parameter kann vorzugsweise wiederholt und/oder kontinuierlich erfolgt. Dadurch kann durch das Verfahren das Teigband fortlaufend auf ein gewünschtes Maß gebracht werden.

Die Verbreiterungsvorrichtung kann eine Satellitenwalze umfassen. Dadurch kann durch das Verfahren das Teigband auf besonders schonende Art verbreiterbar und/oder das Risiko, dass Risse in dem Teigband entstehen, reduzierbar sein.

Das Einstellen eines oder mehrerer Parameter kann ein Einstellen eines Winkels zwischen einer Rotationsachse der Satellitenwalze und einer Förderrichtung der Fördervorrichtung umfassen. Alternativ oder zusätzlich das Einstellen eines oder mehrerer Parameter ein Einstellen eines Abstands zwischen der Fördervorrichtung und einer Rotationsachse der Satellitenwalze umfassen. Alternativ oder zusätzlich kann das Einstellen eines oder mehrerer Parameter ein Einstellen einer Rotationsgeschwindigkeit der Satellitenwalze umfasst. Durch das Einstellen unterschiedlicher Parameter sowie unterschiedlicher Kombinationen von Parametern kann eine sehr genaue Regelung der Teigbandbreite ermöglicht werden.

Die Erfindung bezieht sich auf eine Teigverarbeitungsvorrichtung sowie auf ein Verfahren der vorstehend beschriebenen Art. Im Folgenden wird eine vorteilhafte Ausführung beispielhaft anhand von Zeichnungen näher erläutert.

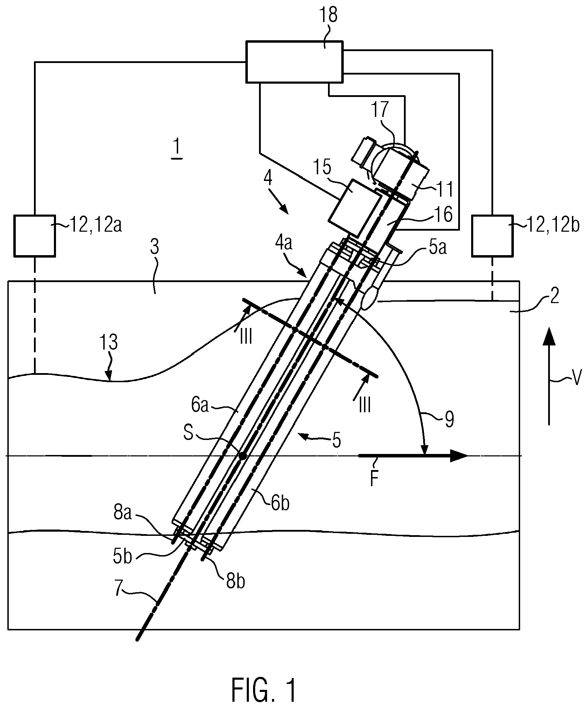

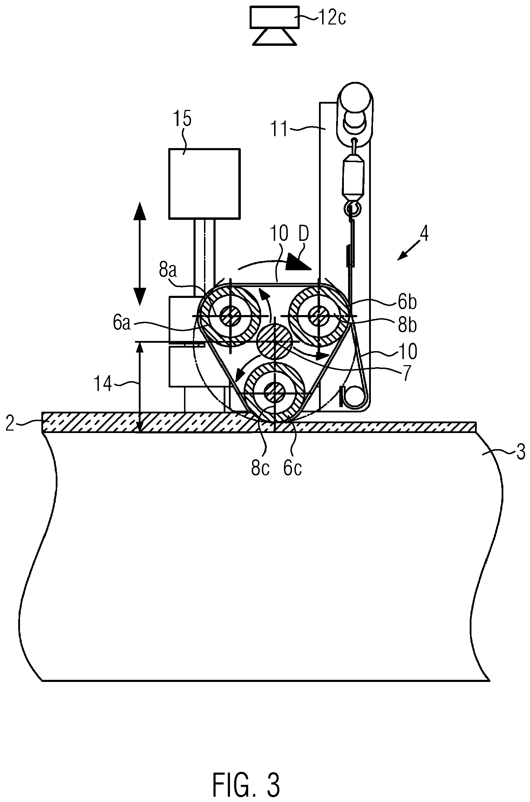

Figur 1 zeigt eine schematische Draufsicht von oben auf eine Teigverarbeitungsvorrichtung 1 zum Verarbeiten eines Teigbands 2. Die Teigverarbeitungsvorrichtung 1 kann eine Fördervorrichtung 3, zum Beispiel ein Förderband, aufweisen. Die Fördervorrichtung 3 kann zum Fördern des Teigbands 2 in einer Förderrichtung F konfiguriert sein. Die Teigverarbeitungsvorrichtung 1 kann eine Verbreiterungsvorrichtung 4 umfassen, Die Verbreiterungsvorrichtung 4 kann die dazu konfiguriert sein, das durch die Fördervorrichtung 3 geförderte Teigband 2 zu verbreitern. Wie im Ausführungsbeispiel gezeigt, kann die Teigverarbeitungsvorrichtung 1, insbesondere die Verbreiterungsvorrichtung 4, eine Satellitenwalze 4a umfassen. Die Satellitenwalze 4a kann eine Trommel 5 aufweisen. Die Trommel 5 kann zum Beispiel zwei Platten 5a, 5b enthalten. Die Satellitenwalze 4a kann, wie im vorliegenden Ausführungsbeispiel, drei Walzen 6a, 6b, 6c aufweisen (siehe Figur 3). Auch Satellitenwalzen 4a mit nur zwei 6a, 6b oder mit mehr als 3 Walzen sind denkbar.

Die Satellitenwalze 4a, insbesondere die Trommel 5, kann um eine Rotationsachse 7 rotierbar sein. Die Teigverarbeitungsvorrichtung 1, insbesondere die Satellitenwalze 4a, kann einen Rotationsaktor 16 umfassen. Der Rotationsaktor 16 kann dazu konfiguriert sein, die Rotation der Trommel 5 zu unterstützen und/oder anzutreiben. Der Rotationsaktor 16 kann z. B. einen Elektromotor aufweisen. Eine Rotationsgeschwindigkeit der Satellitenwalze 4a kann, insbesondere stufenlos, einstellbar sein, z. B. durch Einstellung einer Drehzahl des Rotationsaktors 16. Die Walzen 6a, 6b, 6c können durch eine Rotation der Trommel 5 um die Rotationsachse 7 drehbar sein. Insbesondere können die Walzen 6a, 6b, 6c an den Platten 5a, 5b montiert, vorzugsweise rotierbar gelagert, sein. Wie im vorliegenden Ausführungsbeispiel können die Walzen 6a, 6b, 6c jeweils um eine Walzenachse 8a, 8b, 8c rotierbar sein. Die Walzenachsen 8a, 8b, 8c können parallel zu der Rotationsachse 7 orientiert sein.

Die Teigverarbeitungsvorrichtung 1 kann des Weiteren eine Erfassungseinheit 12 umfassen. Wie im vorliegenden Ausführungsbeispiel kann die Erfassungseinheit 12 dazu konfiguriert sein, die Position einer Seitenkante 13 des Teigbands 2 vor und/oder nach dem Durchlaufen der Verbreiterungsvorrichtung 4 zu erfassen. Die Erfassungseinheit kann zum Beispiel eine erste Sensoreinheit 12a und eine zweite Sensoreinheit 12b umfassen. Die erste Sensoreinheit 12a kann dazu konfiguriert sein, die Position der Seitenkante 13 des Teigbands 2 vor dem Durchlaufen der Verbreiterungsvorrichtung 4 zu erfassen. Die zweite Sensoreinheit 12b kann dazu konfiguriert sein, die Position der Seitenkante 13 des Teigbands 2 nach dem Durchlaufen der Verbreiterungsvorrichtung 4 zu erfassen. Die erste Sensoreinheit 12a kann stromaufwärts der Verbreiterungsvorrichtung 4angeordnet sein. Die zweite Sensoreinheit 12b kann stromabwärts der Verbreiterungsvorrichtung 4 angeordnet sein. Die erste und die zweite Sensoreinheit 12a, 12b können jeweils Licht- und/oder Lasersensoren umfassen. Alternativ oder zusätzlich ist es kann die Erfassungseinheit 12 eine Kamera 12c (s. Fig. 3) umfassen, die dazu konfiguriert sein kann, die Position der Seitenkante 13 des Teigbands 2 sowohl vor als auch nach dem Durchlaufen der Verbreiterungsvorrichtung 4 zu erfassen, bspw. durch Bildverarbeitungsverfahren.

Die Rotationsachse 7 und die Förderrichtung F können, wie im vorliegenden Ausführungsbeispiel, einen Winkel 9 einschließen. Als Winkel 9 wird, wie weiter oben bereits erwähnt, zur besseren Unterscheidung verschiedener Ausführungsbeispiele ein Winkel angesehen, der von einem Schnittpunkt S zwischen der Rotationsachse 7 und der Förderrichtung F aus gesehen auf einer Seite der Förderrichtung F liegt, die in dieselbe Richtung weist, wie eine Verbreiterungsrichtung V, in der eine Verbreiterung des Teigbands 2 erfolgt. Wie im vorliegenden Ausführungsbeispiel, kann der Winkel 9 stromabwärts der Satellitenwalze 4 eingeschlossen sein.

Der Winkel 9 kann einstellbar sein. Dazu kann die Teigverarbeitungsvorrichtung 1, insbesondere die Verbreiterungsvorrichtung 4, einen Winkelaktor 17 umfassen. Der Winkelaktor 17 kann dazu konfiguriert sein, den Winkel 9 einzustellen. Der Winkelaktor 17 kann z. B. einen Stellmotor umfassen.

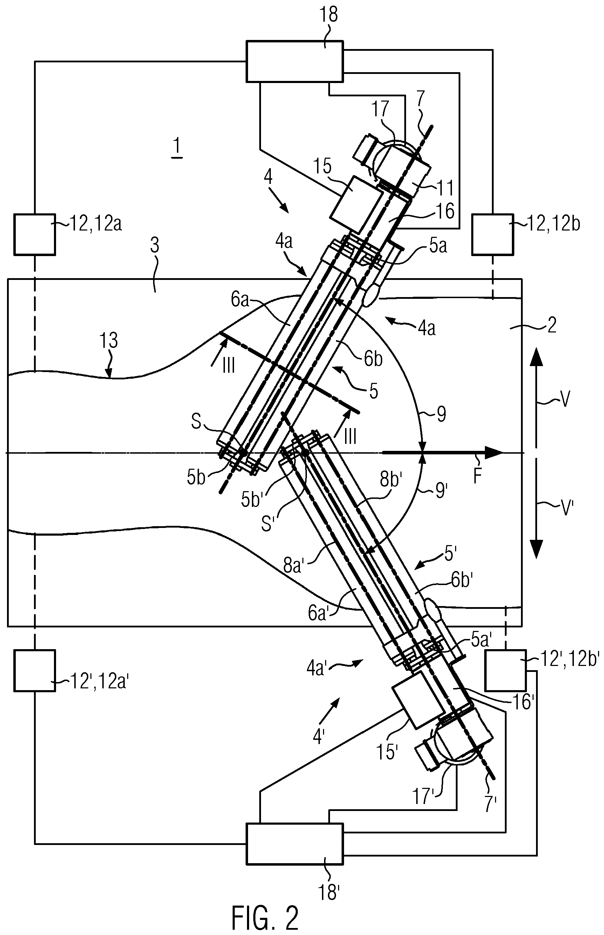

In Figur 2 ist ein zweites Ausführungsbeispiel der Teigverarbeitungsvorrichtung 1 in einer Draufsicht zu sehen. Das zweite Ausführungsbeispiel unterscheidet sich vom ersten dadurch, dass Teigverarbeitungsvorrichtung 1, insbesondere die Verbreiterungsvorrichtung 4, eine zweite Satellitenwalze 4a' umfasst. Die zweite Satellitenwalze 4a' kann dazu konfiguriert sein, das Teigband 2 in einer zweiten Verbreiterungsrichtung V' zu verbreitern. Die zweite Verbreiterungsrichtung V' kann der Verbreiterungsrichtung V entgegengesetzt orientiert sein. Die zweite Satellitenwalze 4a' kann insbesondere mit Bezug auf die Förderrichtung F gespiegelt zu der Satellitenwalze 4a angeordnet und ansonsten analog zu der Satellitenwalze 4a konfiguriert sein und. Die entsprechenden Strukturen der Satellitenwalze 4' sind mit den gleichen Bezugszeichen ergänzt um einen Strich versehen. Um Wiederholungen zu vermeiden, wird lediglich darauf hingewiesen, dass die obigen Beschreibungen bezüglich der Komponenten der Satellitenwalze 4a auch auf die zweite Satellitenwalze 4a' anwendbar sind.

Die zweite Satellitenwalze 4a' kann, wie in Figur 2 gezeigt, stromabwärts der Satellitenwalze 4a angeordnet sein. Eine Anordnung der zweiten Satellitenwalze 4a` stromaufwärts der Satellitenwalze 4 ist ebenfalls denkbar. Für einen zweiten Winkel 9' der zweiten Satellitenwalze 4a` gilt, analog zu den vorigen Ausführungen mit Bezug auf den Winkel 9, dass er von einem zweiten Schnittpunkt S' zwischen einer zweiten Rotationsachse 7' und der Förderrichtung F aus gesehen auf einer Seite der Förderrichtung F liegt, die in dieselbe Richtung weist, wie eine zweite Verbreiterungsrichtung V`, in der eine Verbreiterung des Teigbands 2 erfolgt. Analog zum ersten Ausführungsbeispiel, kann der zweite Winkel 9`, wie im vorliegenden zweiten Ausführungsbeispiel, stromabwärts der Satellitenwalze 4' eingeschlossen sein. Der zweite Winkel 9' kann gleichgroß, kleiner oder größer als der Winkel 9 sein. Der Winkel 9 und der zweite Winkel 9' können synchron oder unabhängig voneinander einstellbar sein.

Figur 3 zeigt eine in den Figuren 1 und 2 durch die Schnittlinie III-III angedeutete Schnittansicht. Die folgenden Erläuterungen beziehen sich auf die Satellitenwalze 4a. Es sollte jedoch klar sein, dass diese Erläuterungen analog auch auf die zweite Satellitenwalze 4a' anwendbar sind. Wie in Figur 3 erkennbar, kann die Satellitenwalze 4a einen Riemen 10 umfassen. Der Riemen 10 kann mit den Walzen 6a, 6b, 6c eingreifen. Die Walzen 6a, 6b, 6c können durch das Eingreifen mit dem Riemen 10 in eine Rotation um die jeweilige Walzenachse 8a, 8b, 8c versetzt werden. Die Satellitenwalze 4 kann ein Gestell 11 aufweisen. Die Satellitenwalze 4a, insbesondere die Trommel 5, kann an dem Gestell 11 rotierbar gelagert sein. Wie in der in Figur 3 gezeigten Variante, kann die Trommel 5 relativ zu dem Riemen 10 rotierbar sein. Der Riemen 10 kann statisch an dem Gestell 11 befestigt sein.

Die Satellitenwalze 4a kann zum Rotieren in einer Rotationsrichtung D konfiguriert sein. Wie in Figur 3 zu erkennen, kann die Rotationsrichtung D derart orientiert sein, dass die Walzen 6a, 6b, 6c, in der vorliegenden Abbildung die Walze 6c wenigstens teilweise parallel zu der Förderrichtung F um die Rotationsachse 7 drehen. Ein Abstand 14 zwischen der Fördervorrichtung 3 und der Rotationsachse 7 kann, vorzugsweise stufenlos, einstellbar sein. Dazu kann die Teigverarbeitungsvorrichtung 1 einen Abstandsaktor 15 umfassen, der zum Einstellen des Abstands 14 zwischen der Fördervorrichtung 3 und der Rotationsachse 7 konfiguriert sein kann.

Die Erläuterungen mit Bezug auf Figur 3 sind sowohl auf das erste Ausführungsbeispiel aus Figur 1 als auch auf das zweite Ausführungsbeispiel aus Figur 2 anwendbar.

Die Teigverarbeitungsvorrichtung 1 kann des Weiteren eine Verarbeitungseinheit 18 umfassen. Es kann sich bevorzugt um eine elektronische Verarbeitungseinheit handeln. Die Verarbeitungseinheit kann dazu konfiguriert sein, Signale von der Erfassungseinheit 12, z. B. von einer oder mehreren des ersten und zweiten Sensoreinheiten 12a, 12b und/oder von der Kamera 12c, zu empfangen. Die Verarbeitungseinheit 18 kann des Weiteren dazu konfiguriert sein, basierend auf einem oder mehreren von der Erfassungseinheit 12 empfangenen Signalen einen oder mehrere Parameter einzustellen. Durch einstellen des Parameters oder der Parameter kann ein Ausmaß der durch die Verbreiterungsvorrichtung 4 erzeugten Verbreiterung des Teigbands 2 veränderbar sein. Als Parameter können, wie im vorliegenden Ausführungsbeispiel, der Winkel 9 und/oder der Abstand 14 zwischen der Fördervorrichtung 3 und der Rotationsachse 7 und/oder die Rotationsgeschwindigkeit der Satellitenwalze 4a angesehen werden.

Gemäß dem Ausführungsbeispiel kann die Verarbeitungseinheit 18 dazu konfiguriert sein, den Winkel 9 einzustellen. Dazu kann die Verarbeitungseinheit 18 dazu konfiguriert sein, den Winkelaktor 17 anzusteuern. Alternativ oder zusätzlich kann die Verarbeitungseinheit 18 dazu konfiguriert sein, den Abstand 14 zwischen der Fördervorrichtung 3 und der Rotationsachse 7 einzustellen. Dazu kann die Verarbeitungseinheit 18 dazu konfiguriert sein, den Abstandsaktor 15 anzusteuern. Alternativ oder zusätzlich kann die Verarbeitungseinheit 18 dazu konfiguriert sein, die Rotationsgeschwindigkeit der Satellitenwalze 4a einzustellen. Dazu kann die Verarbeitungseinheit 18 dazu konfiguriert sein, den Rotationsaktor 16 anzusteuern.

Die Einstellung eines, mehrerer oder aller der vorgenannten Parameter kann basierend auf Signalen von der Erfassungseinheit erfolgen. Dadurch können Schwankungen der Breite des Teigbands stromabwärts der Verbreiterungsvorrichtung reduziert werden.

Eine Fachperson erkennt, dass die vorstehenden Erläuterungen bzgl. der Erfassungseinheit 12, der verschiedenen Aktoren 15, 16, 17 und der Verarbeitungseinheit 18 auch auf die entsprechenden analogen Komponenten aus dem in Figur 2 gezeigten Ausführungsbeispiel anwendbar sind, deren Bezugszechen mit einem Strich gekennzeichnet sind. Es ist denkbar, dass die Erfassung der jeweiligen Seitenkanten 13, 13' des Teigbands 2 und die Einstellung der Aktoren 15', 16', 17` der zweiten Satellitenwalze 4a' bzw. der Aktoren 15, 16, 17 der Satellitenwalze 4a unabhängig voneinander erfolgen können. Alternativ ist es denkbar, dass die Erfassung der jeweiligen Seitenkanten 13, 13` des Teigbands 2 und die Einstellung der Aktoren 15', 16', 17' der zweiten Satellitenwalze 4a' bzw. der Aktoren 15, 16, 17 der Satellitenwalze 4a abhängig voneinander, bspw. synchronisiert erfolgen können. Des Weiteren ist denkbar, dass anstatt zweier Verarbeitungseinheiten 18, 18' nur eine Verarbeitungseinheit 18 vorgesehen ist, welch dazu konfiguriert sein kann, Signale von allen Erfassungseinheiten 12, 12' zu empfangen und sämtliche Aktoren 15, 16, 17, 15', 16', 17' anzusteuern.

## Patentansprüche

1. Teigverarbeitungsvorrichtung (1) mit einer Fördervorrichtung (3), die dazu konfiguriert ist, ein Teigband (2) zu fördern, und mit einer Verbreiterungsvorrichtung (4), die dazu konfiguriert ist, das durch die Fördervorrichtung (3) geförderte Teigband (2) zu verbreitern, wobei ein Ausmaß der durch die Verbreiterungsvorrichtung (4) erzeugten Verbreiterung des Teigbands (2) durch Einstellen eines oder mehrerer Parameter veränderbar ist,
**gekennzeichnet durch** eine Erfassungseinheit (12), die dazu konfiguriert ist, eine Position einer Seitenkante (13) des Teigbands (2) vor und/oder nach dem Durchlaufen der Verbreiterungsvorrichtung (4) zu erfassen, und durch eine Verarbeitungseinheit (18), die dazu konfiguriert ist, den Parameter oder einen der Parameter basierend auf einem Signal von der Erfassungseinheit (12) einzustellen.

2. Teigverarbeitungsvorrichtung nach Anspruch 1, wobei die Erfassungseinheit (12) dazu konfiguriert ist, die Position der Seitenkante (13) des Teigbands (2) vor und/oder nach dem Durchlaufen der Verbreiterungsvorrichtung (4) wiederholt und/oder kontinuierlich zu erfassen.

3. Teigverarbeitungsvorrichtung nach Anspruch 1 oder 2, wobei die Verarbeitungseinheit (18) dazu konfiguriert ist, den Parameter oder einen der Parameter basierend auf dem Signal von der Erfassungseinheit (12) wiederholt und/oder kontinuierlich einzustellen.

4. Teigverarbeitungsvorrichtung nach einem der vorangehenden Ansprüche, wobei die Verbreiterungsvorrichtung (4) eine Satellitenwalze (4a) umfasst.

5. Teigverarbeitungsvorrichtung nach Anspruch 4, wobei eine Rotationsachse (7) der Satellitenwalze (4a) in einem Winkel (9) zu einer Förderrichtung (F) der Fördervorrichtung (3) orientiert ist, wobei der Winkel (9) einstellbar ist.

6. Teigverarbeitungsvorrichtung nach Anspruch 5, wobei die Verarbeitungseinheit (18) dazu konfiguriert ist, den Winkel (9) als den Parameter oder einen der Parameter einzustellen.

7. Teigverarbeitungsvorrichtung nach einem der Ansprüche 4 bis 6, wobei die Verarbeitungseinheit (18) dazu konfiguriert ist, einen Abstand (14) zwischen der Fördervorrichtung (3) und einer Rotationsachse (7) der Satellitenwalze (4a) als den Parameter oder einen der Parameter einzustellen.

8. Teigverarbeitungsvorrichtung nach einem der Ansprüche 4 bis 7, wobei die Verarbeitungseinheit (18) dazu konfiguriert ist, eine Rotationsgeschwindigkeit der Satellitenwalze (4a) als den Parameter oder einen der Parameter einzustellen.

9. Verfahren zum Verarbeiten von Teig, insbesondere eines Teigbands (2), durch eine Teigverarbeitungsvorrichtung (1), umfassend:
Fördern des Teigbands (2) durch eine Fördervorrichtung (3),
Verbreitern des Teigbands (2) durch eine Verbreiterungsvorrichtung (4), wobei ein Ausmaß der durch die Verbreiterungsvorrichtung (4) erzeugten Verbreiterung des Teigbands (2) durch Einstellen eines oder mehrerer Parameter veränderbar ist,
Erfassen einer Position einer Seitenkante (13) des Teigbands (2) vor und/oder nach dem Durchlaufen der Verbreiterungsvorrichtung (4),
Einstellen des oder eines der Parameter basierend auf der erfassten Position der Seitenkante (13) des Teigbands (2).

10. Verfahren nach Anspruch 9, wobei das Einstellen eines oder mehrerer Parameter wiederholt oder kontinuierlich erfolgt.

11. Verfahren nach Anspruch 9 oder 10, wobei die Verbreiterungsvorrichtung (18) eine Satellitenwalze (4a) umfasst.

12. Verfahren nach Anspruch 11, wobei das Einstellen eines oder mehrerer Parameter ein Einstellen eines Winkels (9) zwischen einer Rotationsachse (7) der Satellitenwalze (4a) und einer Förderrichtung (F) der Fördervorrichtung (3) umfasst.

13. Verfahren nach Anspruch 11 oder 12, wobei das Einstellen eines oder mehrerer Parameter ein Einstellen eines Abstands (14) zwischen der Fördervorrichtung (3) und einer Rotationsachse (7) der Satellitenwalze (4a) umfasst.

14. Verfahren nach einem der Ansprüche 11 bis 13, wobei das Einstellen eines oder mehrerer Parameter ein Einstellen einer Rotationsgeschwindigkeit der Satellitenwalze (4a) umfasst.
